# EUROPEAN PATENT APPLICATION

(11) **EP 3 118 043 A1**
(43) Date of publication of application: **18.01.2017**
(21) Application number: 16178825.2
(22) Date of filing: 11.07.2016
(51) Int. Cl.: B60K 15/067, B60K 13/04, B60K 15/03

(54) **SYNTHETIC RESIN TANK**

(30) Priority: 15.07.2015 JP 2015141023
(71) Applicant: Caterpillar SARL, 1208 Geneva (CH)
(72) Inventor: SHIMOYAMADA, Keiichi, Tokyo, 1588530 (JP)
(74) Representative: Wagner, Karl H.

(57) **Abstract**

This invention relates to a synthetic resin tank which can prevent being damaged when it expands or contracts by the change of ambient temperature, though it can be easily fixed on the vehicle with fasteners such as a bolts, without the need of belts for securing it to the vehicle. The synthetic resin tank comprises a body (4) which defines a storage space for fluid and fixing means (6) which are attached to the body (4). At least one recess (42) is formed on a surface of the body (4). The fixing means (6) includes at least one elastically deformable plate portion (46) which covers the recess (42) partially and which has a through hole (50).

## Description

### [Technical Field]

The present invention relates to a synthetic resin tank fixed to a vehicle.

### [Background Art]

As a tank accommodating liquid and fixed to a vehicle, a synthetic resin tank may be employed instead of a metal tank from the viewpoint of its reduced manufacturing cost, manufacturing easiness where its shape is complicated, or the like. There is a case that a synthetic resin tank expands or shrinks due to a change in ambient temperature or the like. Therefore, in such a case, in order to prevent damage on a tank fixed to a vehicle, there has been employed a technology in which a belt is wound around a groove formed on the front face of the tank and both ends in the longitudinal direction of the belt are fastened to the vehicle to fix the tank to the vehicle (see, for example, PTL 1).

### [Citation List]

### [Patent Literature]

[PTL 1] Japanese Patent Application Laid-open No. 2000-64351

### [Summary of Invention]

### [Technical Problem]

The technology for fixing a synthetic resin tank to a vehicle disclosed in PTL 1 requires a belt not required where a metal tank is fixed to the vehicle, which gives rise to a problem that the number and cost of components increase and that the operation of assembling the vehicle becomes complicated since the operation requires winding of the belt on the tank.

The present invention has been made in view of the above facts and has its principal technological problem of providing a synthetic resin tank that does not require a belt for fixing the tank to a vehicle and prevents damage on the tank even when the tank expands or shrinks due to a change in ambient temperature although the tank can be easily fixed to the vehicle by a fastening member such as a bolt.

### [Solution to Problem]

According to the present invention, there is provided, in order to solve the above technological problem, a synthetic resin tank fixed to a vehicle, the tank including: a tank body that defines accommodation space in which liquid is accommodated; and fixation means attached along the tank body, wherein a front face of the tank body has at least one concave part, and the fixation means includes at least one elastically-deformable plate-shaped part that partially covers the concave part and has a through-hole.

The concave part is preferably formed at an upper part or a lower part of the tank body. The plate-shaped part preferably extends from a fixed end connected to the tank body along an outer edge of the concave part and has a free end. A front face of the plate-shaped part is favorably flush with the front face of the tank body in a region adjacent to the concave part or positioned inside the front face of the tank body in the region adjacent to the concave part. The plate-shaped part preferably has an opening.

### [Advantageous Effects of Invention]

A synthetic resin tank provided according to the present invention can be easily fixed to a vehicle by a fastening member such as a bolt inserted in the through-hole of a plate-shaped part. Therefore, a belt for fixing the tank to the vehicle is not required. In addition, in the synthetic resin tank according to the present invention, stress caused in a tank body and the plate-shaped part is dispersed by the elastic deformation of the plate-shaped part even when the tank expands or shrinks due to a change in ambient temperature after being fixed to the vehicle. Therefore, damage on the tank body and the plate-shaped part is prevented.

### [Brief Description of Drawings]

[Fig. 1]

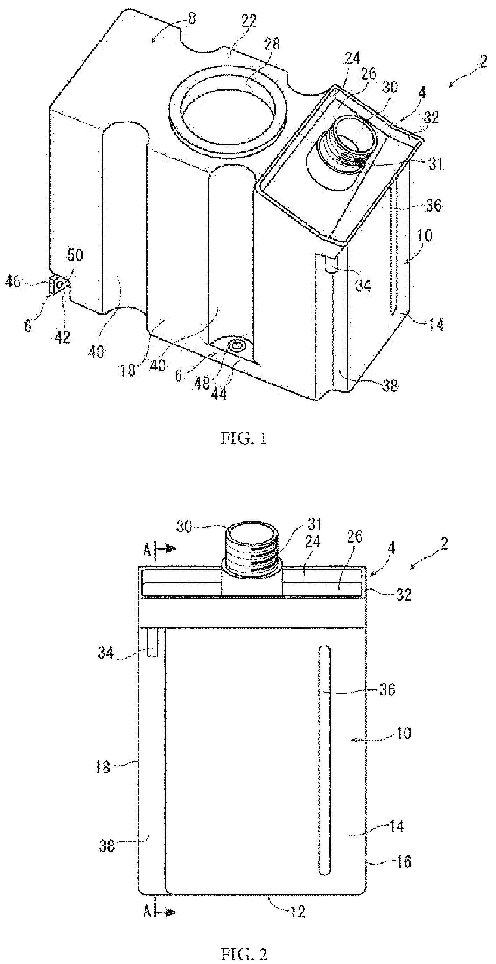

   Fig. 1 is a perspective view of a tank configured according to the present invention when seen from its front upper side;
[Fig. 2]
   Fig. 2 is a front view of the tank shown in Fig. 1;
[Fig. 3]

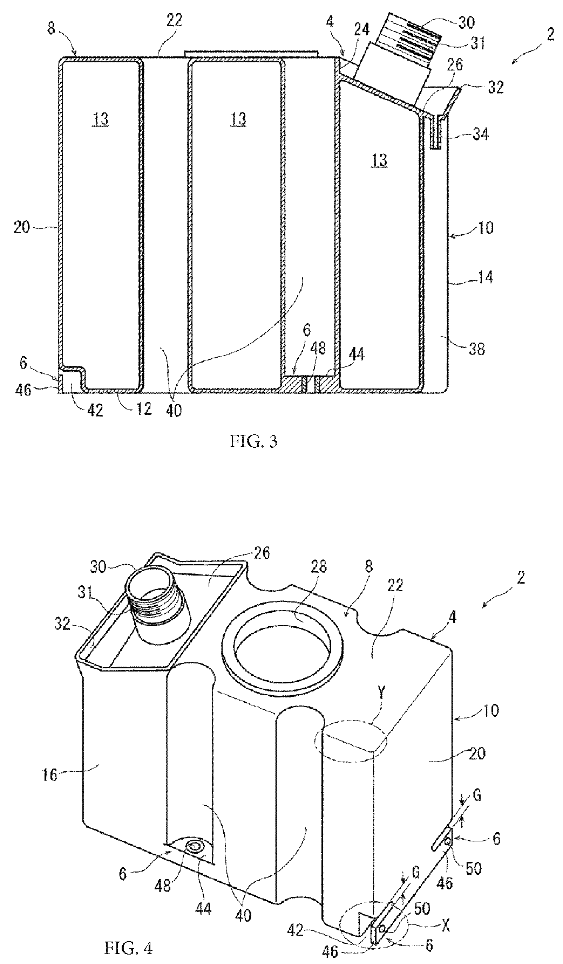

   Fig. 3 is a cross-sectional view taken along line A-A in Fig. 2;
[Fig. 4]
   Fig. 4 is a perspective view of the tank shown in Fig. 1 when seen from its rear upper side;
[Fig. 5]

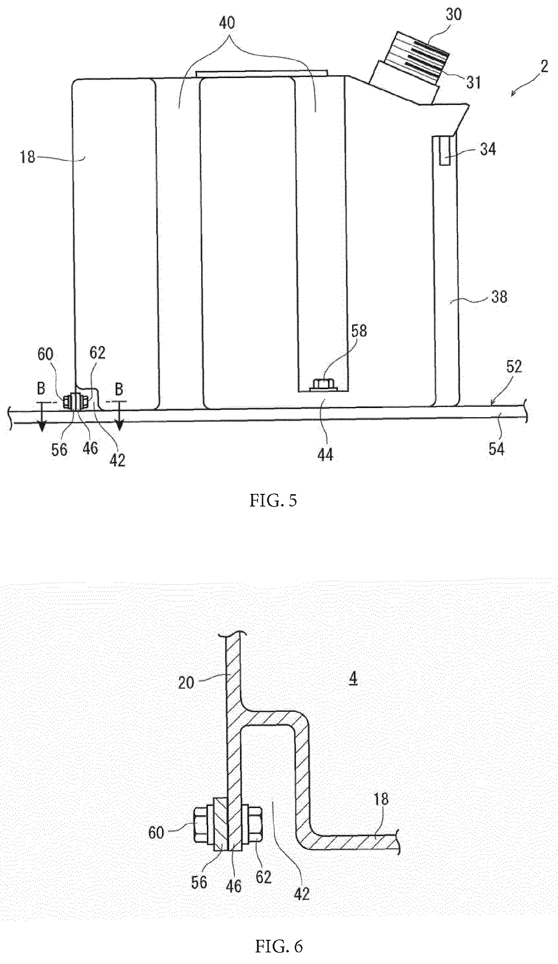

   Fig. 5 is a left side view of the tank shown in Fig. 1, the tank being fixed to a vehicle;
[Fig. 6]
   Fig. 6 is a cross-sectional view taken along line B-B in Fig. 5;
[Fig. 7]

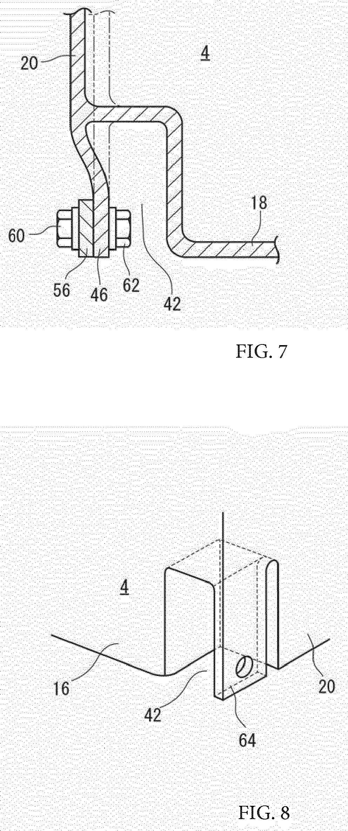

   Fig. 7 is a cross-sectional view of the tank shown in Fig. 6, the tank being in an expanded state;
[Fig. 8]
   Fig. 8 is a partially-enlarged view of a first modified example of the tank according to the present invention;
[Fig. 9]

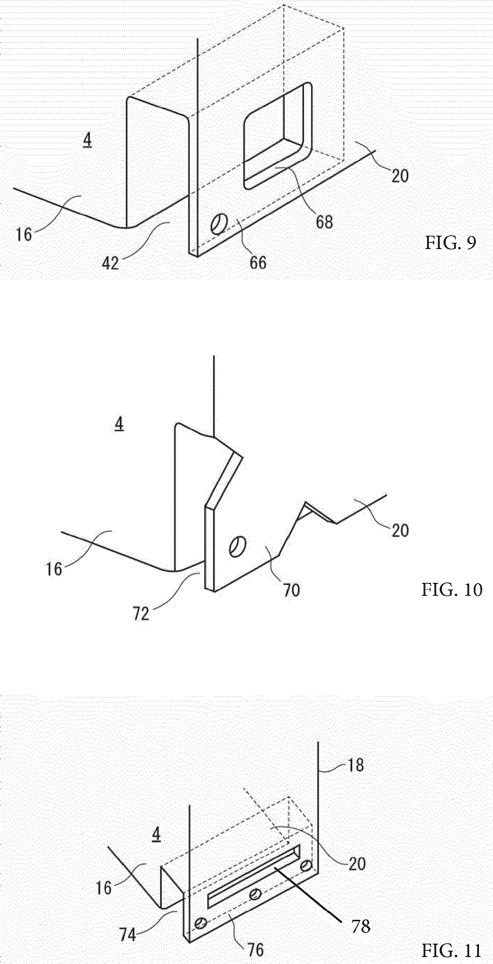

   Fig. 9 is a partially-enlarged view of a second modified example of the tank according to the present invention;
[Fig. 10]
   Fig. 10 is a partially-enlarged view of a third modified example of the tank according to the present invention;
[Fig. 11]
   Fig. 11 is a partially-enlarged view of a fourth modified example of the tank according to the present invention;
[Fig. 12]

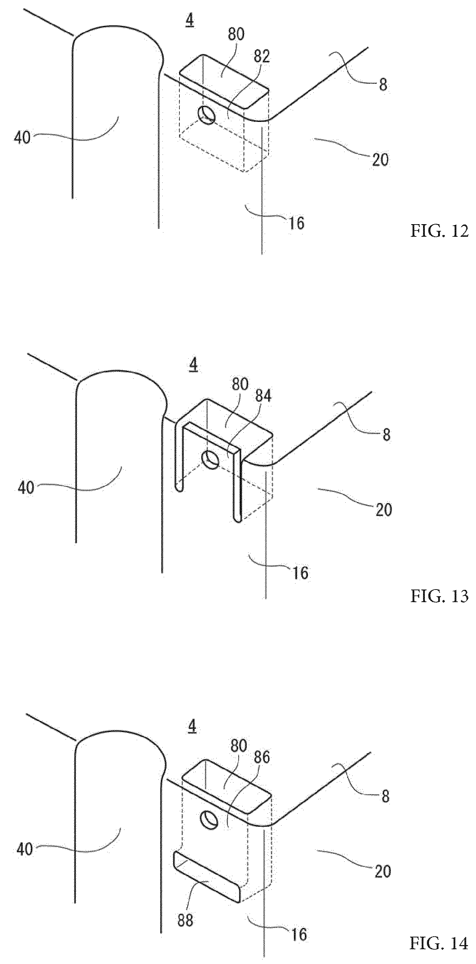

   Fig. 12 is a partially-enlarged view of a fifth modified example of the tank according to the present invention;
[Fig. 13]
   Fig. 13 is a partially-enlarged view of a sixth modified example of the tank according to the present invention; and
[Fig. 14]
   Fig. 14 is a partially-enlarged view of a seventh modified example of the tank according to the present invention.

### [Description of Embodiments]

Hereinafter, with reference to the accompanying drawings, a description will be given in detail of an embodiment of a synthetic resin tank configured according to the present invention.

A description will be given with reference to Figs. 1 to 4. A tank the entirety of which is indicated by reference sign 2 is provided with a tank body 4 and fixation means 6 attached along the tank body 4. The tank body 4 is provided with a rectangular-shaped upper wall 8, a rectangular-cylindrical-shaped vertical wall 10 extending downward from the periphery of the upper wall 8, and a rectangular-shaped lower wall 12 connected to the lower end of the vertical wall 10, and formed into a cuboid shape as a whole. As shown in Fig. 3, the tank body 4 defines accommodation space 13, in which urea water or liquid such as fuel for reducing nitrogen oxide in exhaust gas is accommodated, by the inner face of the upper wall 8, the inner face of the vertical wall 10, and the inner face of the lower wall 12.

The tank 2 can be integrally blow-molded or rotationally-molded by an appropriate synthetic resin. Examples of synthetic resin materials for molding the tank 2 include olefin-based resins and fluorine-containing resins. Examples of the olefin-based resins include ethylene-based resins such as high density polyethylene (HDPE), medium density polyethylene (MDPE), low density polyethylene (LDPE), and a cross-linked polyethylene (XLPE) or include propylene-based resins such as polypropylene (PP). Examples of the fluorine-containing resins include tetrafluoroethylene-perfluoro alkylvinyl ether copolymer (PFA), poly vinylidene difluoride (PVDF), and polytetrafluoroethylene (PTFE).

Hereinafter, for convenience of description, it is assumed about the vertical wall 10 in the specification that a part extending to the near side of space in Fig. 2 is a front part 14, a part extending to the back side of the space from the right end of the front part 14 in Fig. 2 is a right side part 16, a part extending to the back side of the space from the left end of the front part 14 in Fig. 2 is a left side part 18, and a part extending between the extending end of the right side part 16 and the extending end of the left side part 18 is a rear part 20 (see Figs. 3 and 4). In addition, in Fig. 2, it is assumed about a front-rear direction and a right-left direction in the specification that the near side of the space is a front side, the back side of the space is a rear side, the right side of the space is a right side, and the left side of the space is a left side.

As shown in Fig. 1, the upper wall 8 has a horizontal part 22 extending substantially horizontally, a hanging part 24 hanging down from the front end of the horizontal part 22, and a tilting part 26 tilting and extending downward from the lower end of the hanging part 24 to the front side. The horizontal part 22 has a circular-shaped connection opening 28. A conduit (not shown) continuing to a suction pump (not shown) for suctioning liquid inside the accommodation space 13, or the like is connected to the connection opening 28. A cylindrical-shaped supply port 30 extending perpendicular to the tilting part 26 is disposed at the tilting part 26. The supply port 30 of which the outer peripheral face has a male screw 31 is fitted with a cylindrical-shaped cover member (not shown) of which the inner peripheral face has a female screw to be threadedly engaged with the male screw 31. In addition, a protrusion wall 32 protruding upward from each of a front end, a right end, and a left end is disposed at the tilting part 26. The protrusion wall 32 is formed into a U-shape when seen from its upper side. The right rear end of the protrusion wall 32 is connected to the right end of the hanging part 24, the left rear end of the protrusion wall 32 is connected to the left end of the hanging part 24, and the hanging part 24 and the protrusion wall 32 construct a dam covering the periphery of the supply port 30. As shown in Figs. 1 to 3, a cylindrical-shaped drain port 34 of which the upper and lower sides are opened is disposed at the left lower end of the tilting part 26. The lower end of the drain port 34 extending downward along a recessed part 38 that will be described later is connected to a drain pipe (not shown) that can be constituted by a rubber or resin hose or the like.

As shown in Figs. 1 and 2, an observation window 36 extending in a vertical direction is disposed at the front part 14. The observation window 36 for allowing an operator to confirm a liquid amount inside the accommodation space 13 is integrally molded with the front part 14 by a transparent resin, preferably, a colorless transparent resin. Parts other than the observation window 36 of the tank 2 are molded by a colored non-transparent resin, for example, a black non-transparent resin. The front face of the observation window 36 is favorably flush with the front face of the front part 14. Note that the observation window 36 may be disposed at the right side part 16, the left side part 18, or the rear part 20.

As shown in Fig. 1, the recessed part 38 extending in the vertical direction is formed at the connection part between the front part 14 and the left side part 18. As shown in Figs. 1 and 4, the right side part 16 and the left side part 18 have, in the front-rear direction, two vertical grooves 40 extending in the vertical direction so as to be spaced apart from each other. Each of the vertical grooves 40 is formed into a semicircular shape when seen in the vertical direction. In addition, in the illustrated embodiment, as shown in Figs. 1 and 4, the front face of each of right and left lower ends on the rear side of the tank body 4 has a cuboid-shaped concave part 42.

In the tank 2 configured according to the present invention, it is important for the fixation means 6 to include at least one elastically-deformable plate-shaped part partially covering the concave parts 42 and having a through-hole. In the illustrated embodiment, as shown in Figs. 1 and 4, the fixation means 6 is constituted by a pair of thick semicircular-shaped flanges 44 attached along the lower ends of the vertical grooves 40 and constituted by a pair of thin plate-shaped parts 46 covering the concave parts 42 on the rear side and elastically deformable. The concave parts 42 are covered by the plate-shaped parts 46 on the rear side and opened outward in the right-left direction and downward.

In the illustrated embodiment, the flanges 44 are attached along the lower ends of the vertical grooves 40 positioned on the front side of the right and left side parts 16 and 18. Note that the flanges 44 may be attached along the lower ends of the vertical grooves 40 positioned on the rear side of the right and left side parts 16 and 18. Alternatively, the flanges 44 may be attached along the lower ends of the vertical grooves 40 positioned on both front and rear sides of the right and left side parts 16 and 18. It is understood with reference to Figs. 1 and 4 that the inner side faces of the flanges 44 in the right-left direction are connected to the semicircular-shaped faces of the vertical grooves 40. The right side face of the flange 44 positioned at the right side part 16 is flush with the front face of the right side part 16 at parts at which the vertical grooves 40 and the concave part 42 are not formed. The left side face of the flange 44 positioned at the left side part 18 is flush with the front face of the left side part 18 at parts at which the recessed part 38, the vertical grooves 40, and the concave part 42 are not formed. As shown in Fig. 3, metal cylindrical-shaped collars 48 of which the upper and lower sides are opened are embedded in the flanges 44 by insert molding.

The elastically-deformable plate-shaped parts 46 preferably extend from a fixed end connected to the tank body 4 along the outer edges of the concave parts 42 and have a free end. In the illustrated embodiment, as shown in Fig. 4, the plate-shaped parts 46 formed into a cuboid shape extend outward in the right-left direction from the fixed end connected to the tank body 4 along a part extending in the vertical direction at the reverse L-shaped rear end edges of the concave parts 42, and use their extending end as a free end. The extending ends of the plate-shaped parts 46 have a circular-shaped through-hole 50. It is understood with reference to Fig. 4 that gaps G exist between the upper ends of the plate-shaped parts 46 and parts extending in right-left direction at the reverse L-shaped rear end edges of the concave parts 42.

The front faces of the plate-shaped parts 46 are favorably flush with the front face of the tank body 4 in regions adjacent to the concave parts 42, or favorably positioned inside the front face of the tank body 4 in the regions adjacent to the concave parts 42. In the illustrated embodiment, as shown in Fig. 4, the rear faces of the plate-shaped parts 46 are flush with the front face of the rear part 20 at parts at which the concave parts 42 are not formed. In addition, the extending end face of the plate-shaped part 46 positioned on the right side is flush with the front face of the right side part 16 at parts at which the vertical grooves 40 and the concave part 42 are not formed. As shown in Fig. 1, the extending end face of the plate-shaped part 46 positioned on the left side is flush with the front face of the left side part 18 at parts at which the recessed part 38, the vertical grooves 40, and the concave part 42 are not formed.

Fig. 5 shows a fixation part 52 of a vehicle to which the tank 2 is fixed. In the illustrated embodiment, the fixation part 52 of the vehicle includes a plate member 54 extending substantially horizontally and brackets 56 (only one shown) provided to stand on the plate member 54 so as to be spaced apart from each other. The plate member 54 is provided with female screws (not shown) formed so as to be spaced apart from each other, and the brackets 56 have a bolt hole (not shown). In fixing the tank 2 to the fixation part 52 of the vehicle, bolts 58 inserted in the collars 48 of the flanges 44 are threadedly engaged with the female screws of the plate member 54 to fasten the flanges 44 to the plate member 54. Then, bolts 60 inserted from the rear side of the brackets 56 in the bolt holes of the brackets 56 and the through-holes 50 of the plate-shaped parts 46 are threadedly engaged with nuts 62 disposed on the front side of the plate-shaped parts 46 to fasten the plate-shaped parts 46 to the brackets 56. Accordingly, since the tank 2 can be easily fixed to the fixation part 52 of the vehicle by the bolts 58 and 60 and the nuts 62, a belt for fixing the tank 2 to the vehicle is not required.

A description will be given with reference to Figs. 6 and 7. Even when the tank body 4 expands due to a change in ambient temperature or the like as shown in Fig. 7 after the tank 2 is fixed to the fixation part 52 of the vehicle as shown in Fig. 6, stress caused in the tank body 4 and the plate-shaped parts 46 is dispersed by the elastic deformation of the plate-shaped parts 46. Thus, damage on the tank body 4 and the plate-shaped parts 46 is prevented, and the tank 2 is kept fixed to the fixation part 52 of the vehicle. In addition, although not shown in the figures, even when the tank body 4 shrinks due to a change in ambient temperature or the like, stress caused in the tank body 4 and the plate-shaped parts 46 is dispersed by the elastic deformation of the plate-shaped parts 46. Thus, damage on the tank body 4 and the plate-shaped parts 46 is prevented, and the tank 2 is kept fixed to the fixation part 52 of the vehicle.

In supplying liquid into the accommodation space 13 of the tank 2 fixed to the vehicle using a general-purpose supply container having no automatic supply stop function, an operator supplies the liquid while confirming a liquid amount inside the accommodation space 13 through the observation window 36. Thus, the liquid can be prevented from spilling out of the supply port 30. Even when the liquid spills out of the supply port 30, the spilling-out liquid is dammed on the tilting part 26 by the hanging part 24 and the protrusion wall 32 of the upper wall 8, and the dammed liquid is discharged outside the vehicle via the drain port 34 and the drain pipe. Thus, the liquid is prevented from being splashed on the horizontal part 22 of the upper wall 8, the front face of the vertical wall 10 or the like, equipment disposed adjacent to the tank 2 in the vehicle, or the like, and contamination, corrosion, or the like caused by the splashed liquid is prevented.

The present invention is not limited to the embodiment described above but may be modified in various ways. For example, as in a first modified example shown in Fig. 8, a plate-shaped part 64 may extend downward from a fixed end connected to the tank body 4 along a part extending in the right-left direction at the reverse L-shaped rear end edge of the concave part 42. Alternatively, as in a second modified example shown in Fig. 9, a plate-shaped part 66 may extend downward and outward in the right-left direction from a fixed end connected to the tank body 4 along the reverse L-shaped rear end edge of the concave part 42. The plate-shaped part 66 preferably has an opening 68. The opening 68 for facilitating the elastic deformation of the plate-shaped part 66 is formed into a rectangular shape in Fig. 9, but may be formed into a triangular shape, a circular shape, or the like. As in a third modified example shown in Fig. 10, a concave part 72 having a triangular prism shape may be formed. A plate-shaped part 70 shown in Fig. 10 extends downward and outward in the right-left direction from a fixed end connected to the tank body 4 along the obliquely-extending rear end edge of the concave part 72. Note that Figs. 8 to 10 are enlarged views of parts each corresponding to a part indicated by X in Fig. 4.

As in a fourth modified example shown in Fig. 11, a concave part 74 may be formed ranging from the right side part 16 to the left side part 18. A plate-shaped part 76 shown in Fig. 11 extends downward from a fixed end connected to the tank body 4 along the rear end edge of the concave part 74. The plate-shaped part 76 preferably has a rectangular-shaped opening 78 extending in the right-left direction. Note that the one plate-shaped part 76 extending downward is shown in Fig. 11, but a plurality of plate-shaped parts extending downward so as to be spaced apart from each other in the right-left direction may be formed.

Moreover, a concave part is not necessarily formed at a rear lower end so long as it is formed at the front face of the tank body 4. For example, as shown in Figs. 12 to 14, a concave part 80 may be formed at the connection part between the upper wall 8 and the right side part 16. In a fifth modified example shown in Fig. 12, a plate-shaped part 82 is connected to the tank body 4 along the U-shaped right outer edge of the concave part 80. In a sixth modified example shown in Fig. 13, a plate-shaped part 84 extends upward from a fixed end connected to the tank body 4 along a part extending in the front-rear direction at the U-shaped right outer edge of the concave part 80. In a seventh modified example shown in Fig. 14, a plate-shaped part 86 is connected to the tank body 4 along a part extending in the vertical direction at the U-shaped right outer edge of the concave part 80 and has a rectangular-shaped opening 88 at its lower part. Note that Figs. 12 to 14 are enlarged views of parts each corresponding to a part indicated by Y in Fig. 4.

### [Reference Signs List]

- 2: Tank
- 4: Tank body
- 6: Fixation means
- 13: Accommodation space
- 42: Concave part
- 46: Plate-shaped part
- 50: Through-hole

## Claims

1. A synthetic resin tank fixed to a vehicle, comprising:
a tank body that defines accommodation space in which liquid is accommodated; and
fixation means attached along the tank body, wherein
a front face of the tank body has at least one concave part, and
the fixation means includes at least one elastically-deformable plate-shaped part that partially covers the concave part and has a through-hole.

2. The synthetic resin tank according to claim 1, wherein
the concave part is formed at an upper part or a lower part of the tank body.

3. The synthetic resin tank according to claim 1 or 2, wherein
the plate-shaped part extends from a fixed end connected to the tank body along an outer edge of the concave part and has a free end.

4. The synthetic resin tank according to any of claims 1 to 3, wherein
a front face of the plate-shaped part is flush with the front face of the tank body in a region adjacent to the concave part or positioned inside the front face of the tank body in the region adjacent to the concave part.

5. The synthetic resin tank according to any of claims 1 to 4, wherein
the plate-shaped part has an opening.
